(19) Europäisches Patentamt
European Patent Office
Office européen des brevets

(11) **EP 3 901 604 B1**

(12) **FASCICULE DE BREVET EUROPEEN**

(45) Date de publication et mention de la délivrance du brevet:
**17.07.2024 Bulletin 2024/29**

(21) Numéro de dépôt: **21166821.5**

(22) Date de dépôt: **02.04.2021**

(51) Classification Internationale des Brevets (IPC):
**G01M 3/20** (2006.01)    **G01M 3/38** (2006.01)
**G01N 21/33** (2006.01)    **G01N 21/3504** (2014.01)

(52) Classification Coopérative des Brevets (CPC):
**G01M 3/20; G01M 3/38; G01N 21/33;**
**G01N 21/3504;** G01N 2021/3155

(54) **SYSTEME ET PROCEDE POUR LA SURVEILLANCE DE FUITES DE GAZ AU MOYEN D'UNE MESURE OPTIQUE**

SYMSTEM UND VERFAHREN ZUR ÜBERWACHUNG VON GASLECKS MITHILFE EINER OPTISCHEN MESSUNG

SYSTEM AND METHOD FOR MONITORING GAS LEAKS BY MEANS OF AN OPTICAL MEASUREMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2020 FR 2004067**

(43) Date de publication de la demande:
**27.10.2021 Bulletin 2021/43**

(73) Titulaire: **IFP Energies nouvelles**
**92500 Rueil-Malmaison (FR)**

(72) Inventeurs:
• **BERTHE, Guillaume**
**92852 RUEIL-MALMAISON CEDEX (FR)**
• **SCHIFFMANN, Philipp**
**92852 RUEIL-MALMAISON CEDEX (FR)**
• **LECOMPTE, Matthieu**
**92852 RUEIL-MALMAISON CEDEX (FR)**
• **MARTIN, Frédéric**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-B1- 1 499 881     WO-A1-2017/201194**
**GB-A- 2 184 230     US-A- 4 507 558**
**US-A- 5 281 816     US-A1- 2018 266 944**

## Description

## Domaine technique

La présente invention concerne de manière générale la surveillance de fuites d'un gaz alimentant ou destiné à alimenter les réseaux de distribution de gaz, tels que le gaz naturel ou le biométhane.

Des fuites de gaz naturel ou de biométhane peuvent se produire de manière non limitative au niveau de sites de stockage de ces gaz (par exemple des réservoirs géologiques ou des cuves), au niveau d'installations pour le transport du gaz (par exemple des conduites à haute pression pour le transport du gaz sur de grandes distances), au niveau d'installations pour la distribution du gaz (par exemple les postes d'injection dans le réseau de distribution, les conduites permettant la distribution locale à différentes entités, particuliers, entreprises, etc...), ou encore au niveau des installations utilisant ces gaz (par exemple des centrales thermiques à gaz, certaines industries chimiques et pétrochimiques, des habitations à usage domestique etc).

Le gaz naturel est un gaz d'origine fossile, constitué d'un mélange d'hydrocarbures gazeux, dont le méthane est l'un des principaux composants. A l'issue de son extraction d'un gisement du sous-sol, le gaz subit des traitements, dont notamment une séparation des condensats du gaz, une désacidification, une désulfuration. C'est à l'issue de ces traitements que le gaz naturel peut être injecté dans le réseau de distribution du gaz naturel. Le gaz naturel est composé à 95% de méthane ($CH_4$), de moins de 4% d'éthane ($C_2H_6$) et d'azote ($N_2$), et de moins de 1% de dioxyde de carbone ($CO_2$) et de propane ($C_3H_8$).

Le biométhane résulte de l'épuration d'un biogaz, qui est produit par la décomposition anaérobie de déchets d'origine organique, tels que les boues des stations d'épuration, les déchets agricoles, les décharges. Le biogaz est principalement composé de méthane (de 40 à 70 %), de $CO_2$ et de vapeur d'eau, mais il contient également des impuretés, telles que des composés soufrés ($H_2S$, $SO_2$, ...), des siloxanes, des halogénés ou bien encore des COV (Composés Organiques Volatiles). Le biogaz n'est donc pas directement exploitable. Pour pouvoir exploiter un biogaz, il est nécessaire qu'il soit épuré (ou encore purifié), notamment pour éliminer le dioxyde de carbone et le sulfure d'hydrogène, mais également les autres impuretés. On obtient ainsi du biométhane que l'on peut injecter dans un réseau de distribution, qui est en général le réseau de distribution du gaz naturel.

Le gaz naturel est inodore, hautement explosif (5 à 15% dans l'air) et mortel lorsqu'il est inhalé à forte concentration. Pour déceler d'éventuelles fuites et éviter tout risque d'explosion, le gaz naturel est artificiellement odorisé avant d'être injecté dans le réseau de transport. Il en est de même pour le biométhane.

Selon les législations en vigueur dans les différents pays, les gaz destinés à être injectés dans des réseaux de distribution de gaz sont soit odorisés en masse lors de leur transport ou au stockage, soit odorisés au point de distribution.

Les molécules odorantes utilisées sont historiquement les mercaptans tels que l'éthane mercaptan (appelé aussi éthanethiol ou mercaptan éthylique), le méthane mercaptan (appelé aussi méthanethiol ou mercaptan méthylique). De nos jours et en particulier en Europe, la molécule de tétrahydrothiophène (connue aussi sous l'acronyme THT, de formule $C_4H_8S$) est la molécule principalement utilisée pour odoriser les gaz destinés à être distribués. Le THT est un liquide incolore et inflammable, avec une odeur caractéristique de soufre (il s'agit d'un composé organique soufré). Les produits odorants sont injectés en très faibles quantités (environ 10 ppb) dans le gaz à odoriser.

Compte tenu de la dangerosité du gaz naturel ou du biométhane, il est important de pouvoir détecter et caractériser des émanations de gaz dans l'air ambiant, notamment déterminer si ces émanations de gaz résultent d'une fuite, afin notamment de déclencher une alerte, ou bien détecter s'il s'agit d'émanations naturelles.

## Technique antérieure

On connait le document GB 2184230 A qui concerne un système et un procédé pour la mesure d'un ingrédient mineur d'un gaz, tel qu'une molécule odorante de THT, basés sur la mesure de transmittances d'un rayonnement UV émis au travers d'une solution formée par cet ingrédient et un liquide absorbant comprenant de l'iode. Toutefois, il est possible qu'une anomalie de concentration en substance odorante soit relevée près des sites dans lesquels le gaz naturel ou le biométhane sont odorisés, sans que cette anomalie soit associée à une fuite du gaz à odoriser lui-même. Ainsi, la technique décrite dans ce document ne permet pas, sur cette seule base, de déclencher de manière certaine une alerte liée à une fuite de gaz naturel ou de biométhane. Par ailleurs, la technique décrite dans ce document ne permet de détecter une fuite que lorsque l'ingrédient mineur est présent dans le gaz à des fortes concentrations.

On connait également le document EP 1499881 B1 qui concerne un procédé de détection et de quantification de substances odorantes exemptes de soufre dans le gaz naturel ou combustible, basé sur l'utilisation de la spectrométrie de mobilité ionique. Ainsi, la technique décrite dans ce document ne permet pas, sur cette seule base, de déclencher une alerte liée à une fuite de gaz car la mesure de concentration en la seule molécule odorante ne permet pas de déterminer de façon certaine s'il s'agit d'une fuite de gaz ou non. En effet, il est possible qu'une anomalie de concentration en substance odorante soit relevée près des sites dans lesquels le gaz naturel ou le biométhane sont odorisés, sans que cette anomalie soit associée à une fuite du gaz à odoriser lui-même. Par ailleurs, la technique décrite dans ce document ne permet pas la quantification particulière en THT (le THT étant un composé soufré), qui est pourtant majoritairement utilisé pour odoriser un gaz de nos jours. Enfin, cette technique ne permet pas de distinguer une fuite de gaz du réseau de gaz, d'une émanation de méthane provenant d'une source naturelle (forte activité biologique, compostage...).

On connait le document CN 204085798 U qui concerne un dispositif pour détecter une fuite de gaz, comprenant un détecteur pour le gaz lui-même et un détecteur de THT basé sur un dispositif de filtration. Toutefois, cette technique présente les inconvénients de ne pas distinguer les différents COV (composés organiques volatiles). Ce plus, cette technique n'est pas une mesure en temps réel. Par ailleurs, elle nécessite une analyse en laboratoire des filtres.

On connait en outre les documents :

- WO 2017/201194 A1 qui concerne un dispositif et une méthode pour imager, détecter et quantifier une fuite de composés hydrocarbonés ;
- US 2018/266944 A1, qui concerne un appareil et une méthode pour détecter, localiser, et imager une fuite de gaz naturel ;
- US 5281816 A, qui concerne une méthode et un dispositif pour détecter des émanations d'hydrocarbures dans une zone sous surveillance ;
- US 4507558 A, qui concerne un dispositif pour discriminer des fuites de gaz naturel par rapport à d'autres sources de méthane.

Le système et le procédé selon l'invention visent à pallier ces inconvénients. Notamment, le système et le procédé selon l'invention visent à fournir la concentration dans l'air ambiant en méthane, qui est l'un des principaux constituants à la fois du gaz naturel et du biométhane, ainsi que la concentration en au moins une espèce chimique gazeuse utilisée pour odoriser le gaz dont une fuite est à surveiller. Cette mesure conjointe permet de qualifier s'il s'agit ou non d'une fuite de gaz de type gaz naturel ou biométhane destinés à un usage commercial, car ces gaz contiennent à la fois au moins du méthane et au moins une molécule odorante.

De plus, ces concentrations peuvent être obtenues en une seule et unique mesure, avec un seul et même système, ce qui diminue l'encombrement et facilite la maintenance et la formation des techniciens amenés à les utiliser. De plus ces mesures sont réalisées in situ, sans nécessiter d'étape de sur-concentration des espèces chimiques à mesurer, même si elles sont présentes en faible quantité dans l'air ambiant. En outre, le procédé selon l'invention peut permettre une mesure dissociée et simultanée d'une pluralité d'espèces chimiques gazeuses autres que le méthane et la molécule odorante.

Ainsi, le système et le procédé selon l'invention permettent une surveillance fiable des éventuelles fuites d'un gaz destiné à alimenter des réseaux de distribution de gaz, en détectant, quantifiant et qualifiant les gaz constituant ces fuites. Le système et le procédé selon l'invention peuvent être avantageusement mis en oeuvre de manière embarquée dans un véhicule.

## Résumé de l'invention

L'invention concerne un procédé pour détecter et caractériser une fuite d'un gaz dans l'air ambiant, ledit gaz comprenant au moins du gaz naturel et/ou du biométhane préalablement odorisés au moyen d'au moins d'une espèce chimique odorante, ledit procédé étant mis en oeuvre au moyen au moins d'un système de mesure optique comprenant au moins une source lumineuse, un spectromètre UV, et un détecteur IR. Le procédé selon l'invention comprend au moins les étapes suivantes :

a) l'émission par ladite au moins ladite source lumineuse d'un rayonnement UV et d'un rayonnement IR à travers ledit air ambiant dans une zone de mesure ;

b) la détection par ledit spectromètre UV et par ledit détecteur IR d'au moins une partie dudit rayonnement UV et d'au moins une partie dudit rayonnement IR ayant traversés ledit air ambiant dans ladite zone de mesure, et la génération d'au moins un signal numérique de l'intensité lumineuse en fonction de la longueur d'onde de ladite partie dudit rayonnement UV et de ladite partie dudit rayonnement IR ayant traversés ledit air ambiant dans ladite zone de mesure ;

c) l'estimation d'au moins une concentration en méthane et une concentration en ladite au moins une espèce chimique odorante présents dans ladite zone de mesure, à partir au moins dudit au moins un signal numérique ;

d) la détection et la caractérisation d'une fuite dudit gaz dans ladite zone de mesure au moins par une comparaison de ladite concentration en méthane avec un premier seuil et une comparaison de ladite concentration en ladite au moins une espèce chimique odorante avec un deuxième seuil.

Selon une mise en oeuvre de l'invention, ledit système de mesure optique peut comprendre au moins un réflecteur pour réfléchir ledit rayonnement UV et ledit rayonnement IR émis par ladite au moins une source lumineuse en direction dudit spectromètre UV et dudit détecteur IR.

Selon une mise en oeuvre de l'invention, ladite espèce chimique odorante peut être du THT, du méthanetiol ou de l'éthanetiol.

Selon une mise en oeuvre de l'invention, à l'étape c), on peut déterminer ladite concentration en méthane et ladite concentration en ladite au moins une espèce chimique odorante de la manière suivante :

- on détermine une absorbance dudit air ambiant en fonction de la longueur d'onde à partir au moins dudit au moins un signal numérique de l'intensité lumineuse en fonction de la longueur d'onde desdites parties dudit rayonnement UV et dudit rayonnement IR ayant traversés ledit air ambiant et d'un signal numérique de référence de l'intensité lumineuse en fonction de la longueur d'onde ;

- on détermine au moins ladite concentration en méthane et ladite concentration en ladite au moins une espèce chimique odorante à partir de ladite absorbance et de caractéristiques prédéterminées d'absorbance, de température et de la pression du méthane et de ladite au moins espèce chimique odorante.

Selon une mise en oeuvre de l'invention, ledit premier seuil peut correspondre à un écart compris entre 0.01 et 0.02 ppm par rapport à une teneur moyenne atmosphérique de référence en méthane.

Selon une mise en oeuvre de l'invention, ledit deuxième seuil peut être compris entre 5 et 7 ppb.

Selon une mise en oeuvre de l'invention, à l'étape c), on peut déterminer en outre une concentration en éthane présent dans ladite zone de mesure, et, à l'étape d), on peut déterminer en outre un rapport entre ladite concentration en éthane et ladite concentration en méthane, et on peut comparer ledit rapport à un troisième seuil pour déterminer si ledit gaz est d'origine thermogénique ou si ledit gaz est d'origine biogénique.

Selon une mise en oeuvre de l'invention, ledit troisième seuil peut être compris entre 3.5% et 4.5%.

Selon une mise en oeuvre de l'invention, on peut réaliser une étape supplémentaire consistant en l'analyse de l'isotopie de la molécule de méthane présente dans ladite zone de mesure, par une estimation au moins du rapport isotopique $\delta^{13}C$ et du rapport isotopique $\delta D$.

L'invention concerne en outre un système pour la mise en oeuvre du procédé pour détecter et caractériser une fuite d'un gaz dans l'air ambiant tel que décrit ci-dessus, ledit système comprenant au moins :

- au moins une source lumineuse pour émettre un rayonnement UV et un rayonnement IR à travers l'air ambiant dans une zone de mesure ;

- un spectromètre susceptible de détecter au moins une partie dudit rayonnement UV ayant traversé l'air ambiant dans ladite zone de mesure et de générer un signal numérique de l'intensité lumineuse en fonction de la longueur d'onde de ladite partie du rayonnement UV ;

- un détecteur IR susceptible de détecter au moins une partie dudit rayonnement IR ayant traversé l'air ambiant dans ladite zone de mesure, et de générer un signal numérique de l'intensité lumineuse en fonction de la longueur d'onde de la partie du rayonnement IR ;

- des moyens pour le traitement et l'analyse desdits signaux numériques pour détecter et caractériser ladite fuite dudit gaz dans l'air ambiant.

Selon une mise en oeuvre de l'invention, ledit détecteur IR peut comprendre au moins un capteur pyroélectrique apte à détecter au moins la présence de méthane.

Selon une mise en oeuvre de l'invention, ledit détecteur IR peut comprendre en outre au moins un capteur pyroélectrique supplémentaire, apte à détecter au moins la présence d'éthane.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

## Liste des figures

La figure 1A est un schéma illustrant une configuration transmissive du système de mesure optique selon une mise en oeuvre de l'invention, apte à la mise en oeuvre du procédé selon l'invention.

La figure 1B est un schéma illustrant une configuration réflective du système de mesure optique selon une mise en oeuvre de l'invention, apte à la mise en oeuvre du procédé selon l'invention.

La figure 2 représente schématiquement l'absorbance d'un gaz comportant différentes espèces chimiques gazeuses A, B, C que l'on souhaite mesurer.

La figure 3 représente schématiquement l'influence de la température sur l'absorbance d'une espèce chimique donnée contenue dans un milieu gazeux.

La figure 4 représente les concentrations en méthane, en éthane, en THT, en éthanethiol et en dioxyde de soufre déterminés pour un exemple d'application du procédé et du système selon une mise en oeuvre de l'invention.

## Description des modes de réalisation

La présente invention concerne un procédé et un système pour la détection et la caractérisation d'une fuite de gaz dans l'air ambiant.

Le gaz selon l'invention est soit de type gaz naturel, c'est-à-dire un gaz issu des réserves fossiles, soit de type biométhane, c'est-à-dire un gaz issu du traitement (épuration notamment) d'un biogaz, soit un mélange de ces deux gaz.

Par ailleurs, le gaz selon l'invention a été préalablement odorisé, ce qui signifie qu'il comprend au moins une espèce chimique classiquement utilisée pour odoriser le gaz naturel et/ou le biométhane avant leur transport et/ou leur distribution. Par la suite, on parle d'espèces chimiques odorantes pour ces espèces chimiques, qui sont présentes sous forme gazeuse dans le gaz naturel et/ou le biométhane odorisés.

Selon une mise en oeuvre de l'invention, l'espèce chimique odorante est du tétrahydrothiophène (de formule chimique $C_4H_8S$, et appelé THT par la suite). Le THT est classiquement utilisé pour donner une odeur caractéristique soufrée aux gaz utilisés par le public, afin de pouvoir détecter d'éventuelles fuites au moins de manière olfactive. Alternativement, l'espèce chimique odorante fait partie de la famille des mercaptans, tels que l'éthanethiol ou le méthanethiol.

Le procédé selon l'invention est mis en oeuvre au moins au moyen d'un système de mesure optique comprenant au moins une source lumineuse pour une émission à la fois dans l'ultraviolet (noté UV par la suite) et dans l'infra-rouge (noté IR par la suite), au moins un spectromètre apte à au moins une mesure d'un rayonnement dans l'ultra-violet (appelé spectromètre UV par la suite) et au moins un détecteur apte à une mesure d'un rayonnement dans l'infra-rouge (appelé détecteur IR par la suite).

Le procédé selon l'invention comprend au moins les étapes 1) à 4) suivantes :

1) l'émission par au moins une source lumineuse d'un rayonnement UV et d'un rayonnement IR à travers l'air ambiant présent dans une zone de mesure ;
2) la détection par le spectromètre UV et le détecteur IR respectivement d'au moins une partie du rayonnement UV et d'au moins une partie du rayonnement IR ayant traversés l'air ambiant dans la zone de mesure et la génération d'au moins un signal numérique de l'intensité lumineuse en fonction de la longueur d'onde de la partie du rayonnement UV et de la partie du rayonnement IR ayant traversés l'air ambiant dans la zone de mesure ;
3) l'estimation d'au moins la concentration en méthane et de la concentration en l'espèce chimique odorante présents dans la zone de mesure à partir au moins du signal numérique ;
4) la détection et la caractérisation d'une fuite de gaz dans la zone de mesure au moins par une comparaison de la concentration en méthane avec un premier seuil et une comparaison de la concentration en l'espèce chimique odorante avec un deuxième seuil.

Le système selon l'invention comprend au moins un système de mesure optique comprenant au moins :

- au moins une source lumineuse pour émettre un rayonnement UV et un rayonnement IR à travers l'air ambiant dans une zone de mesure ;
- un spectromètre susceptible de détecter au moins une partie du rayonnement UV ayant traversé l'air ambiant dans la zone de mesure et de générer un signal numérique de l'intensité lumineuse en fonction de la longueur d'onde de la partie du rayonnement UV ;
- un détecteur IR susceptible de détecter au moins une partie du rayonnement IR ayant traversé l'air ambiant dans la zone de mesure, et de générer un signal numérique de l'intensité lumineuse en fonction de la longueur d'onde de la partie du rayonnement IR.

De plus, le système selon l'invention comprend en outre des moyens pour le traitement et l'analyse du ou des signaux numériques (par exemple par voie informatique à l'aide d'un microprocesseur) pour détecter et/ou caractériser une fuite de gaz à partir du ou des signaux numériques, notamment selon l'une quelconque des variantes des étapes 3 et 4 du procédé selon l'invention décrites ci-dessous.

Avantageusement, le système selon l'invention comprend en outre des moyens pour la transmission (par exemple par voie filaire électrique, par fibre optique ou par un système de communication sans fil) des mesures réalisées au moyen du système optique aux moyens pour le traitement et l'analyse du ou des signaux numériques.

Le procédé selon l'invention est avantageusement mis en oeuvre au moyen d'une unique source lumineuse, apte à émettre à la fois dans l'UV et dans l'IR. Avantageusement, le spectromètre UV et le détecteur IR sont réunis en un seul dispositif, par exemple sous la forme d'un spectromètre UV et IR, c'est-à-dire sous la forme d'un unique spectromètre, apte à une mesure à la fois d'un rayonnement UV et IR. La source lumineuse et/ou le spectromètre uniques permettent de réduire l'encombrement et les coûts de maintenance du système utilisé pour mettre en oeuvre le procédé selon l'invention, ainsi que de faciliter la mise en oeuvre du procédé selon l'invention. Alternativement, le procédé selon l'invention peut être mis en oeuvre au moyen de deux sources lumineuses et/ou deux spectromètres, la première source lumineuse étant apte à émettre dans l'UV et la deuxième source lumineuse étant apte à émettre dans l'IR, et le premier spectromètre étant apte à mesurer un rayonnement lumineux dans l'UV et le deuxième spectromètre étant apte à mesurer un rayonnement lumineux dans l'IR. Selon une mise en oeuvre préférée de l'invention, le détecteur IR comprend au moins un capteur pyroélectrique apte au moins à détecter la présence de méthane dans un gaz traversé par un rayonnement IR, tel que cela sera décrit ci-après.

La présente invention permet une mesure in situ, c'est-à-dire directement dans l'air ambiant et sans prélèvement d'échantillon du gaz, ni transformation ou préconditionnement du gaz. Le système de mesure optique selon l'invention, permettant une mesure in situ, peut être aisément embarqué dans ou sur un véhicule, ou tout autre engin mobile. Ainsi, le procédé selon l'invention peut être avantageusement mis en oeuvre directement dans les rues d'une ville comprenant un réseau de distribution de gaz, près d'un site de stockage de gaz, le long d'un gazoduc etc...

Par ailleurs, le procédé selon l'invention, basé sur une mesure optique, est instantané, par exemple avec un temps de réponse pouvant être inférieur à 0,1 s. Le procédé selon l'invention est donc apte à une surveillance en temps réel de sites et/ou d'installations comportant du gaz, et de pouvoir ainsi déclencher des alertes en cas de fuites de gaz.

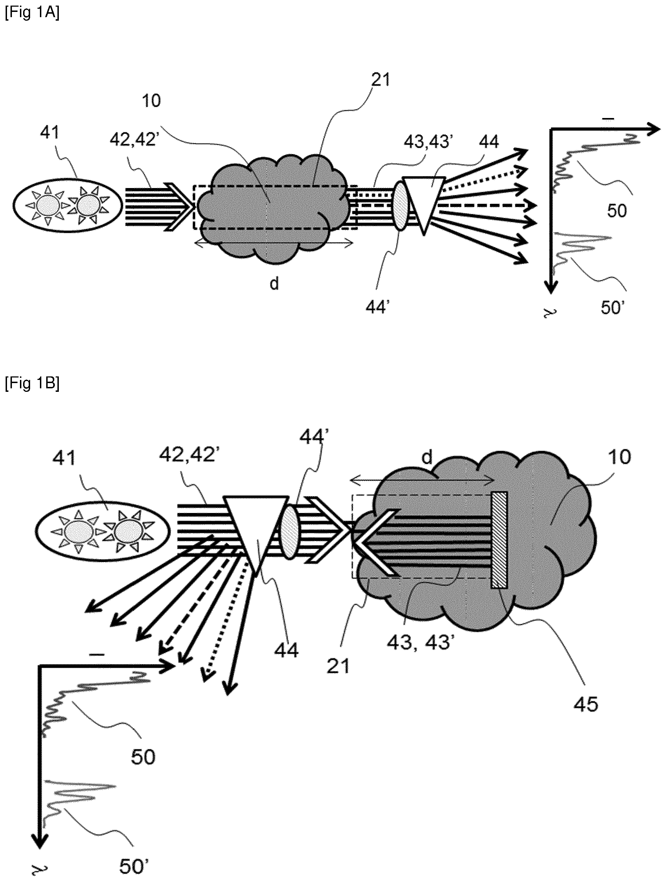

Les figures 1A et 1B représentent schématiquement et non limitativement les éléments d'une mise en oeuvre du système optique selon l'invention, comprenant une unique source lumineuse 41 pour émettre à la fois un rayonnement UV 42 et IR 42', un spectromètre UV 44 un détecteur IR 44' distinct du spectromètre UV 44. La figure 1A diffère de la figure 1B par le système de mesure optique, qui est selon une configuration transmissive dans la figure 1A et selon une configuration réflective dans la figure 1B. Les figures 1A et 1B illustrent également le principe des deux premières étapes du procédé selon l'invention, mises en oeuvre au moyen de cette mise en oeuvre du système optique selon l'invention. Le procédé selon cette mise en oeuvre de l'invention peut ainsi comprendre les étapes suivantes :

- l'émission par une unique source lumineuse 41 d'un rayonnement UV 42 et IR 42'. Le rayonnement UV 42 et IR 42' traverse l'air ambiant comprenant du gaz 10 dans une zone de mesure 21.
- la détection par le spectromètre UV 44 d'au moins une partie du rayonnement UV 43 ayant traversé l'air ambiant dans la zone de mesure 21, et la génération d'un signal numérique 50 de l'intensité lumineuse en fonction de la longueur d'onde de la partie du rayonnement UV 43 ayant traversé l'air ambiant 10 comprenant du gaz 10 dans la zone de mesure 21. Le rayonnement UV 42 traversant l'air ambiant subit une absorption qui est fonction des espèces chimiques qu'il contient.
- la détection par le détecteur IR 44' d'au moins une partie du rayonnement IR 43' ayant traversé l'air ambiant dans la zone de mesure 21, et la génération d'un signal numérique 50' de l'intensité lumineuse de la partie du rayonnement IR 43' ayant traversé l'air ambiant 10 comprenant du gaz 10 dans la zone de mesure 21. Le rayonnement IR 42' traversant l'air ambiant subit une absorption qui est fonction des espèces chimiques qu'il contient.

Selon la configuration de la figure 1A, la source lumineuse UV et IR 41 d'une part, le spectromètre UV 44 et le détecteur IR 44' d'autre part, sont alignés. Cela est possible car un détecteur IR a une très faible taille (de l'ordre du mm), ce qui permet d'accoler le détecteur IR 44' au spectromètre UV 44. La zone de mesure 21 est, pour cette configuration, définie par le volume d'un cylindre formé par le rayonnement UV 42 et IR 42' se propageant entre la source lumineuse 41 et l'ensemble formé par le spectromètre UV 44 et le détecteur IR 44'. Le chemin optique suivi par le rayonnement UV 42, 43 et IR 42', 43' a une longueur d correspondant à la distance entre la source 41 d'une part, et l'ensemble formé par le spectromètre UV 44 et le détecteur IR 44' d'autre part.

Selon la configuration alternative de la figure 1B, la source 41, le spectromètre UV 44 et le détecteur IR 44' sont accolés les uns aux autres, et le rayonnement UV 42 et IR 42' émis par la source 41 est réfléchi par un réflecteur 45 pour être renvoyé à la fois au spectromètre UV 44 et au détecteur IR 44'. La zone de mesure 21 est, pour cette configuration, définie par le volume d'un cylindre formé par le rayonnement UV 42 et IR 42' se propageant entre la source lumineuse 41, le réflecteur 45, et l'ensemble formé par le spectromètre UV 44 et le détecteur IR 44'. Dans cette configuration, le chemin optique suivi par le rayonnement UV 42, 43 et IR 42', 43' a une longueur d+d, où d est la distance entre la source 41 et le réflecteur 45, ou encore la distance entre le réflecteur 45 et l'ensemble formé par le spectromètre UV 44 et le détecteur IR 44'. La configuration réflective de la figure 1B permet d'augmenter la longueur du chemin optique, et donc d'améliorer la sensibilité du système et du procédé selon l'invention, notamment lorsque les espèces chimiques gazeuses à mesurer sont présentes en faible concentration. Ainsi, la configuration réflective permet d'éviter de sur-concentrer les espèces chimiques à mesurer. Avantageusement, on peut augmenter la longueur du chemin optique et ainsi la sensibilité du système optique selon cette configuration en éloignant le réflecteur 45 de l'ensemble formé par la source 41, le spectromètre UV 44 et détecteur IR 44'. Par exemple, une distance d comprise entre 0,3 et 2,5 m permet d'abaisser le seuil de détection d'une anomalie de concentration en THT de 30 ppb à 5 ppb.

Ainsi, la partie du rayonnement UV 43 et IR 43' ayant traversé l'air ambiant dans la zone de mesure est détectée par le spectromètre UV 44 et le détecteur IR 44' placés soit dans l'alignement de la source lumineuse (configuration de la figure 1A), soit à proximité de la source lumineuse (configuration de la figure 1B).

Il est bien clair que le signal numérique 50' généré par le détecteur IR est dans une gamme de longueur d'onde distincte du signal numérique 50 généré par le spectromètre UV. Selon une mise en oeuvre du procédé selon l'invention, on peut toutefois appliquer l'étape 3) du procédé selon l'invention à un unique signal numérique formé par l'addition des deux signaux numériques 50 et 50' obtenus respectivement par le spectromètre UV et le détecteur IR. Par la suite, on parle de "signal numérique" pour désigner le résultat de l'étape 2 du procédé selon l'invention, que les mesures UV et IR aient été réalisées par un unique ou par plusieurs dispositifs.

Pour le système selon l'invention et pour une mise en oeuvre du procédé selon l'invention dans laquelle une unique source lumineuse est utilisée, permettant d'émettre à la fois dans l'UV et dans l'IR, on peut utiliser une source halogène-deutérium, comme par exemple le modèle Deuterium-Tungsten Halogen Source (Ocean Insight, France).

Selon une mise en oeuvre du procédé selon l'invention selon laquelle on utilise deux sources lumineuses distinctes, une émettant dans l'UV et une émettant dans l'IR :

- la source lumineuse émettant dans l'UV peut être une diode LED émettant dans l'UV et en particulier dans l'UV profond, ou peut être une lampe au xénon, au deutérium, au zinc, au cadmium, ou une autre lampe à gaz comme les lampes excimères KrBr, Kr-CL, KrF.
- la source lumineuse émettant dans l'IR peut être une source halogène-deutérium, comme par exemple le modèle Deuterium-Tungsten Halogen Source (Ocean Insight, France).

Selon une mise en oeuvre de l'invention, on peut utiliser un spectromètre apte à une mesure d'un rayonnement UV permettant d'analyser un rayonnement lumineux préférentiellement dans la gamme de longueur d'onde entre 190 et 250 nm. Un exemple d'un tel spectromètre est le modèle Maya2000 Pro Series Source (Ocean Insight, France). Cette gamme préférentielle est en effet suffisante pour détecter la présence de THT et/ou d'un dérivé du mercaptan à partir du spectre d'absorption d'un rayonnement UV ayant traversé un gaz comprenant du THT et/ou un dérivé du mercaptan. Une gamme de longueur d'onde préférée pour la mesure du THT peut être comprise entre 205 à 215 nm.

Selon une mise en oeuvre de l'invention, le détecteur IR peut être un spectromètre apte à une mesure d'un rayonnement IR. L'utilisation d'un spectromètre IR présente l'avantage de pouvoir réaliser des mesures de concentration en plusieurs espèces chimiques non prédéfinies à l'avance (un spectromètre permettant une mesure de l'intensité lumineuse pour un continuum de longueurs d'onde) et offre une flexibilité en cas d'interférences avec d'autres espèces chimiques. Préférentiellement, on utilise un spectromètre apte à une mesure d'un rayonnement IR dans une gamme de longueurs d'onde au moins comprises entre 3 et 4 $\mu$m. Cette gamme préférentielle de longueur d'onde permet en effet la détection de la présence au moins de méthane, mais également d'éthane tel que cela sera discuté plus bas.

Selon une mise en oeuvre préférée de l'invention, le détecteur IR peut comprendre au moins un capteur pyroélectrique apte à détecter la présence de méthane dans un gaz traversé par un rayonnement IR. Un capteur pyroélectrique est un capteur sensible dans l'IR mesurant un changement de température d'un matériau. Un capteur pyroélectrique mesure l'intensité lumineuse autour de longueurs d'ondes précises, plutôt qu'un continuum du spectre comme pour un spectromètre UV et/ou IR décrits ci-dessus. Ainsi, les longueurs d'onde ciblées dans l'IR correspondent aux bandes d'absorbance des espèces chimiques d'intérêt. Un détecteur IR peut ainsi comprendre au moins un capteur pyrolélectrique, disposé sur un composant électrique, et un filtre, monté devant la partie photo-sensible du capteur, pour laisser passer uniquement la longueur d'onde d'intérêt pour ce capteur. Le signal numérique généré par un capteur pyroélectrique reflète donc l'intensité lumineuse pour la longueur d'onde du filtre optique associé au capteur. En l'espèce, le détecteur IR selon cette mise en oeuvre de l'invention comprend au moins un filtre pour laisser passer la longueur d'onde correspondant à l'absorbance du méthane. On peut par exemple utiliser le détecteur IR TO-39 (Pyreos Sensor Innovation, Grande-Bretagne) pour cette mise en oeuvre de l'invention. Avantageusement, on peut utiliser un détecteur IR comprenant au moins deux capteurs pyroélectriques, aptes à détecter la présence au moins de méthane et d'éthane dans un gaz traversé par un rayonnement IR. Les deux capteurs pyroélectriques peuvent être disposés sur un unique composant électrique, et peuvent être munis de filtres optiques pour laisser passer uniquement les longueurs d'onde caractéristiques du méthane et de l'éthane. Selon cette mise en oeuvre de l'invention, le détecteur IR peut comprendre au moins un premier filtre centré sur une longueur d'onde de 3.3 $\mu$m pour détecter la présence de méthane, et un deuxième filtre centré sur une longueur d'onde de 3.35 $\mu$m pour détecter la présence d'éthane. On peut par exemple utiliser le détecteur IR TO-39 (Pyreos Sensor Innovation, Grande-Bretagne) pour cette mise en oeuvre de l'invention. Comme cela sera décrit plus bas, à partir de la mesure de la concentration en éthane en plus de la concentration en méthane, on peut déterminer un rapport des concentrations en éthane sur méthane afin de déterminer si le gaz dont une fuite a été détectée est d'origine thermogénique ou s'il d'origine biogénique.

De manière très préférée, un détecteur IR comprend en outre au moins un capteur pyroélectrique supplémentaire, permettant de corriger le signal numérique mesuré par chacun des autres capteurs pyroélectriques des fluctuations de l'intensité lumineuse de la source.

Avantageusement, on peut corriger en outre le signal numérique mesuré par au moins un capteur pyroélectrique de l'influence de la température sur l'absorbance de l'espèce chimique gazeuse mesurée par ce capteur. On peut par exemple mesurer la température au moyen d'une station météorologique. La mesure de la température peut être en outre utilisée pour corriger la densité de l'air ambiant ; on peut aussi avantageusement mesurer la pression, au moyen par exemple d'une station météorologique, pour corriger la densité de l'air ambiant.

Préférentiellement, on utilise une pluralité de capteurs pyroélectriques pour corriger le signal numérique mesuré par au moins un capteur pyroélectrique d'une interférence générée par au moins autre espèce chimique gazeuse présente dans l'air ambiant. Selon une mise en oeuvre de l'invention, en plus d'un premier capteur pyroélectrique dédié à une espèce chimique gazeuse d'intérêt, le détecteur IR comprend au moins un deuxième capteur pyroélectrique dédié à l'espèce chimique interférente, et on corrige le signal numérique mesuré par le premier capteur pyroélectrique au moyen du signal numérique mesuré par le deuxième capteur pyroélectrique.

Selon l'étape 3) de l'invention, à partir au moins du signal numérique résultant des mesures réalisées selon l'une quelconque des mises en oeuvre de l'étape 2) décrites ci-dessus, on estime au moins la concentration en méthane et en au moins une espèce chimique odorante présents dans l'air ambiant de la zone de mesure.

Plus précisément, la concentration au moins en méthane et au moins en une espèce chimique gazeuse odorante est déterminée à partir de la mesure optique décrite ci-dessus (étapes 1 et 2) et d'une signature optique propre à chaque espèce chimique gazeuse. En effet, de manière générale, chaque espèce chimique gazeuse dont on souhaite mesurer la concentration absorbe une partie du rayonnement UV et/ou du rayonnement IR et présente un spectre d'absorption qui lui est propre (absorbance en fonction de la longueur d'onde). Selon une mise en oeuvre de l'invention, on peut estimer la concentration d'une espèce chimique gazeuse contenue dans l'air ambiant, dont au moins le méthane et une espèce chimique gazeuse odorante, selon au moins les étapes a) et b) décrites ci-dessous :

a) on détermine l'absorbance A en fonction de la longueur d'onde à partir du ou des signaux numériques de l'intensité lumineuse générés par le spectromètre UV et le détecteur IR tels que décrits ci-dessus. En particulier, l'absorbance A est calculée selon une formule du type :

[math 1]

$$A(\lambda) = -\ln\left(\frac{I_S(\lambda)}{I_0(\lambda)}\right),$$

où $\lambda$ est la longueur d'onde, $I_S(\lambda)$ est le signal numérique de l'intensité lumineuse en fonction de la longueur d'onde de la partie du rayonnement UV et IR ayant traversé le milieu gazeux et ayant été mesurée par le spectromètre UV et le détecteur IR, et $I_0(\lambda)$ est un signal numérique de référence de l'intensité lumineuse en fonction de la longueur d'onde. Le signal numérique de référence de l'intensité lumineuse en fonction de la longueur d'onde peut être obtenu par émission d'un rayonnement UV et IR, par une ou des sources lumineuses, à travers un gaz de référence (c'est-à-dire ne contenant pas de particules ni d'espèces chimiques gazeuses autres que celles composant majoritairement l'air, tel que de l'air filtré, du diazote ou de l'hélium), et par détection, par le spectromètre UV et le détecteur IR tels que décrits ci-dessus, d'au moins une partie dudit rayonnement UV et IR ayant traversé ledit gaz de référence. Avantageusement, le procédé selon l'invention peut comporter une étape préalable de calibration du système de mesure optique selon l'invention pour déterminer un signal numérique de référence de l'intensité lumineuse.

b) on détermine, par exemple à l'aide des moyens d'analyse et de traitement décrits ci-dessus, la concentration de chaque espèce chimique que l'on souhaite mesurer, dont au moins le méthane et une espèce chimique gazeuse odorante, à partir de l'absorbance A du milieu gazeux en fonction de la longueur d'onde, de caractéristiques prédéterminées d'absorbance et d'une estimation de la pression et de la température de chacune des espèces chimiques. Ces caractéristiques prédéterminées d'absorbance de chacune des espèces chimiques peuvent de préférence être obtenues lors de campagnes de mesure préalables permettant de créer une base de données. Des données issues de la littérature peuvent également venir alimenter une telle base de données. Par caractéristique d'absorbance d'une espèce chimique donnée on entend son coefficient d'extinction molaire. Avantageusement, la pression et/ou la température peuvent être estimées par mesure au cours de la mise en oeuvre du procédé selon l'invention, au moyen respectivement d'un capteur de pression et/ou d'un capteur de température.

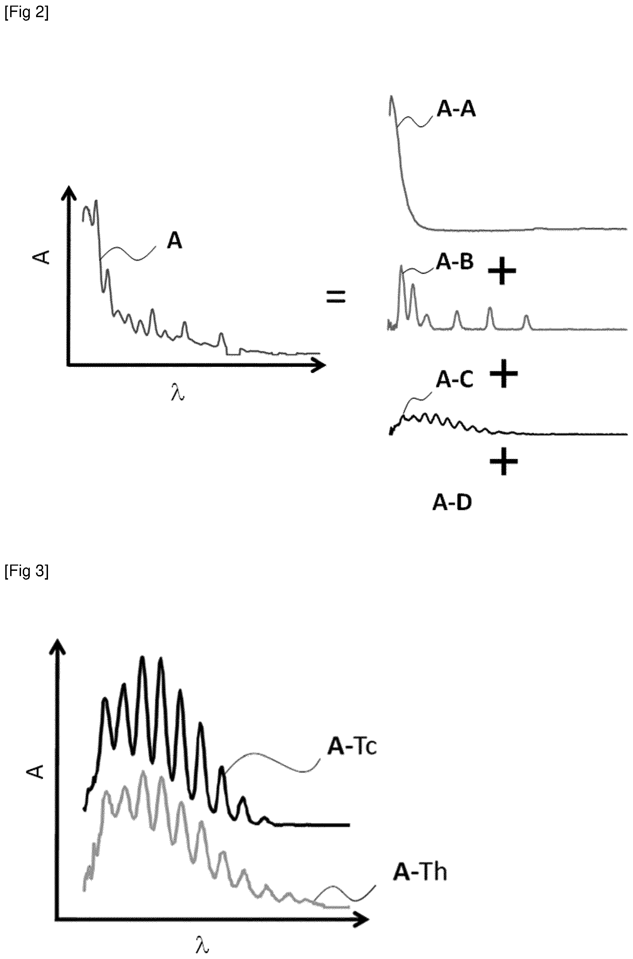

La figure 2 illustre schématiquement l'absorbance A d'un milieu gazeux quelconque comportant différentes espèces chimiques gazeuses A, B, C que l'on souhaite mesurer. Le diagramme de gauche représente un exemple d'absorbance A (sans unité) du milieu gazeux, exprimée en fonction de la longueur d'onde $\lambda$, déterminée tel que décrit ci-dessus. De manière générale, l'absorbance A d'un gaz est une fonction de la longueur d'absorbance, c'est-à-dire la longueur du chemin optique suivi par le rayonnement lumineux entre source lumineuse et spectromètre/détecteur, de la densité numérique des molécules des espèces chimiques gazeuses (A, B, C) contenues dans le milieu gazeux, et du coefficient d'extinction molaire. Le coefficient d'extinction molaire, aussi appelé absorptivité molaire, est une mesure de probabilité qu'un photon soit en interaction avec un atome ou une molécule. La densité numérique des molécules d'une espèce chimique est elle-même fonction de la température, de la pression et de la concentration de l'espèce chimique, et le coefficient d'extinction molaire est fonction de la longueur d'onde, de l'espèce chimique, de la température et de la pression. Ainsi, de manière générale, en disposant des caractéristiques prédéterminées du coefficient d'extinction molaire, de la température et de la pression de chacune des espèces chimiques, il est possible de déterminer la concentration de chaque espèce chimique à partir de l'absorbance A du milieu gazeux. Les valeurs d'absorbance de chaque espèce chimique s'additionnent, et leur somme est typiquement égale aux valeurs d'absorbance A du milieu gazeux, au bruit et à l'absorbance des autres espèces chimiques non mesurées près. C'est ce qui est représenté à droite sur la figure 2 par les diagrammes d'absorbance A-A, A-B, et A-C des espèces chimiques A, B et C, qui s'additionnent pour former l'absorbance A du milieu gazeux, au bruit et aux autres espèces chimiques non détectées près A-D.

Le procédé selon l'invention permet ainsi la mesure dissociée et simultanée de la concentration au moins en méthane et en une espèce chimique odorante, mais aussi tel que cela sera décrit ultérieurement, d'une pluralité d'espèces chimiques gazeuses. Par mesure dissociée, on entend un accès à la concentration propre de chaque espèce chimique, par opposition à une mesure globale de la concentration de plusieurs espèces chimiques sans distinction.

Différents types d'algorithmes peuvent être utilisés pour déterminer une concentration à partir de signaux numériques d'absorbance, tels que des algorithmes d'ajustement des moindres carrés appliqués aux signaux d'absorbance eux-mêmes, aux dérivés des signaux d'absorbance ou à la partie de fréquence des signaux d'absorbance (typiquement dérivé d'une transformée de Fourier). De même, un certain nombre de méthodes chimiométriques peuvent être utilisées pour ce processus comme, par exemple, l'analyse en composantes principales (PCA, pour "Principal Component Analysis") ou les algorithmes des moindres carrés partiels (PLS). Ces algorithmes peuvent être avantageusement mis en oeuvre au moyen des moyens d'analyse et de traitement du système selon l'invention.

A l'issue de l'étape 3) du procédé selon l'invention, on obtient au moins une estimation de la concentration au moins en méthane et en au moins une espèce chimique gazeuse odorante tel que décrit ci-dessus. Ces estimations sont ensuite exploitées dans l'étape 4) du procédé selon l'invention pour la détection et la caractérisation d'une fuite de gaz, par comparaison au moins de la concentration en méthane avec un premier seuil et de la concentration en au moins espèce chimique gazeuse odorante avec un deuxième seuil.

Selon une mise en oeuvre de l'invention, la valeur du premier seuil, relatif à la concentration de méthane, correspond à un écart compris entre 0.01 et 0.02 ppm, préférentiellement de 0.02 ppm, par rapport à une teneur moyenne atmosphérique de référence en méthane comprise entre 1.7 et 1.95 ppm en fonction du positionnement sur le globe terrestre. En effet, la teneur moyenne atmosphérique en méthane est connue à toutes les latitudes du globe. En France par exemple, la concentration moyenne en méthane est de 1,9 ppm dans l'air ambiant. Le système et le procédé selon l'invention permettent la détection du méthane à la dizaine de ppb (0,01 ppm) près, c'est-à-dire largement en dessous de la moyenne atmosphérique. Un écart de 0.01 ppm par rapport à la moyenne atmosphérique peut ainsi être détecté au moyen du procédé et du système selon l'invention. Un écart de 0.02 ppm par rapport à une moyenne connue est un indice d'une potentielle fuite de méthane. Toutefois, cette seule mesure ne permet pas de conclure si l'anomalie en méthane mesurée est due à une fuite de gaz issue d'une installation destinée au stockage, au transport et/ou à la distribution de ce gaz, ou bien à une fuite de gaz présent naturellement dans un réservoir géologique souterrain.

Selon une mise en oeuvre de l'invention, la valeur du deuxième seuil, relatif à la concentration de l'espèce chimique odorante, est compris entre 5 et 7 ppb, et vaut préférentiellement 5 ppb. En effet, les molécules odorantes sont introduites en très faible quantité (environ 10 ppb) dans le réseau pour donner une odeur nauséabonde aux gaz destinés à être distribués, mais qui sont alors diluées dans l'air ambiant en cas de fuite. Le système et le procédé selon l'invention permettent de détecter les molécules odorantes à partir de 5 ppb. Ces molécules ne sont pas présentes naturellement dans la nature. Par conséquent, la détection d'une concentration en espèce chimique odorante supérieure au deuxième seuil tel que défini ci-dessus est un indice de l'origine commerciale du gaz dont une anomalie a été détectée, mais ne suffit pas à conclure qu'il s'agit d'une fuite d'un gaz destiné à être distribué dans des réseaux de distribution de gaz. En effet, il est possible qu'une anomalie de concentration en une espèce chimique odorante soit relevée près des sites dans lesquels le gaz naturel ou le biométhane sont odorisés, sans que cette anomalie soit associée à une fuite du gaz odorisé lui-même.

Le procédé selon l'invention repose sur la combinaison de la détection d'une anomalie de concentration en méthane et d'une anomalie de concentration en au moins une espèce chimique odorante pour conclure de manière certaine que l'on est en présence d'une fuite d'un gaz naturel et/ou d'un biométhane destinés à être distribué commercialement. Ainsi, le procédé et le système selon l'invention permettent non seulement la détection, mais aussi la caractérisation d'une fuite de gaz.

De plus, le procédé selon l'invention présente en plus l'avantage de corriger le spectre d'absorption du méthane de l'effet d'atténuation engendré par d'autres gaz, notamment par le mercaptan et l'éthane. En effet, comme décrit dans le document (Rella, C. W., Hoffnagle, J., He, Y., and Tajima, S.: Local- and regional-scale measurements of CH4, $\delta$13CH4, and C2H6 in the Uintah Basin using a mobile stable isotope analyzer, Atmos. Meas. Tech., 8, 4539-4559, https://doi.org/10.5194/amt-8-4539-2015, 2015), les gaz tels que l'éthane, l'ammoniaque, le sulfure d'hydrogène, le methylmercaptan, le propane, le butane, l'éthylène ont pour effet de fortement déformer le spectre d'absorption du méthane (qui à son tour conduit à une erreur dans l'estimation du $^{13}CH_4$). La

magnitude de cet effet est proportionnelle à la fraction molaire de l'espèce contaminante, et inversement proportionnelle à la concentration en méthane. Le procédé selon l'invention, permettant une mesure dissociée des concentrations en différentes espèces, permet de corriger de cette distorsion, et ce même lorsque le méthane est présent à faible teneur, grâce à la forte sensibilité du système et du procédé selon l'invention.

Selon une première variante du procédé selon l'invention, on peut mesurer en outre, à l'étape 3) du procédé selon l'invention, la concentration en éthane ($C_2H_4$) contenu dans l'air ambiant de la zone de mesure, on détermine un rapport des concentrations en éthane sur méthane (noté $C_2/C_1$) et on compare ce rapport à un troisième seuil pour déterminer si le gaz dont une fuite a été détectée est d'origine thermogénique ou s'il d'origine biogénique. De manière générale, on dit d'un gaz qu'il est thermogénique lorsqu'il provient de la transformation de la matière organique sous l'effet de la chaleur, et on dit qu'il est biogénique lorsqu'il est généré à partir de la fermentation de bactéries présentes dans les sédiments organiques. De manière générale, on ne trouve pas d'éthane dans l'air ambiant. Le gaz naturel d'origine thermogénique (c'est-à-dire de type hydrocarbures) contient environ 4% d'éthane dans le méthane. Ainsi, si on détermine un rapport des concentrations en éthane sur méthane supérieur à un troisième seuil, préférentiellement compris entre 3.5% et 4.5%, et très préférentiellement valant 4%, on peut conclure que la fuite détectée provient d'un gaz d'origine thermogénique. Cette variante contribue ainsi à la caractérisation d'une fuite de gaz. Le système et le procédé selon l'invention sont adaptés à déterminer si un tel seuil a été franchi, car ils permettent la détection de l'éthane à la dizaine de ppb (0.01 ppm).

Selon une mise en oeuvre de cette variante de l'invention, la concentration en éthane est déterminée à partir de l'émission et la détection d'un rayonnement IR centré sur la longueur d'onde 3.35 $\mu$m, qui est la longueur d'onde caractéristique de l'effet de l'éthane sur un spectre d'absorption.

Selon une deuxième variante du procédé selon l'invention pouvant avantageusement être combinée à la première variante du procédé selon l'invention, on réalise une étape supplémentaire consistant en l'analyse de l'isotopie de la molécule de méthane, par exemple au moyen d'un chromatographe en phase gazeuse couplé à un spectromètre de masse à conversion de rapport isotopique (ensemble noté classiquement GC-C-IRMS). En effet, l'isotopie complète de la molécule de $CH_4$ permet de connaître avec précision l'origine du méthane. Selon cette variante de l'invention, on peut mesurer à la fois le rapport isotopique $\delta^{13}C$ et le rapport isotopique $\delta D$ contenus dans le milieu gazeux d'intérêt. Le rapport $\delta^{13}C$ correspond au rapport entre deux des isotopes stables du carbone, les isotopes $^{13}C$ et $^{12}C$. Le rapport $\delta D$ correspond au rapport entre le deutérium D (aussi noté $^2H$) et l'hydrogène H (aussi noté $^1H$). La mesure du rapport isotopique $\delta^{13}C$ n'est pas suffisante pour une caractérisation du gaz dont on a détecté une fuite. La double signature isotopique $\delta^{13}C$ et $\delta D$ permet de mieux séparer les différentes sources de méthane. En effet, la mesure $\delta^{13}C$ d'une molécule de méthane comporte de grandes variations pour une même source (les signatures isotopiques du $^{13}CH_4$ des différentes sources se chevauchent). La signature isotopique de l'hydrogène dans la molécule de méthane va séparer graphiquement les différentes sources comme démontré dans le document (Schoell, M., The hydrogen and carbon isotopic composition of methane from natural gases of various origins, Geochimica Cosmochimica Acta, 44, 649-661, 1980.). Selon une mise en oeuvre de cette variante, on peut reporter la mesure de la double signature dans un graphique $\delta^{13}C$ en fonction du $\delta D$ et la comparer aux signatures isotopiques d'autres sources de méthane connues., tel que réalisé dans le document (Snover, A. K., P. D. Quay and W. M. Hao, The D/H content of methane emitted from biomass burning, Global Biogeochem. Cycles, 14, 1, 11-24, 2000). De cette manière, on peut encore améliorer la caractérisation de l'origine du méthane dont une fuite a été détectée. On peut par exemple de cette façon distinguer si le méthane présent dans l'air ambiant est un méthane d'origine de marais, d'un feu biomasse, de gaz naturel. En effet les gammes de valeurs isotopiques de ces différentes sources peuvent se superposer en $\delta^{13}C$, le deutérium permet de différencier les différentes sources car elles possèdent des valeurs isotopiques en deutérium différentes. Selon une mise en oeuvre de cette deuxième variante de l'invention, la double caractérisation isotopique est réalisée via un GC-C-IRMS, en laboratoire, après un prélèvement in situ d'un échantillon du milieu gazeux à analyser. Selon une mise en oeuvre particulière de cette deuxième variante de l'invention, l'échantillon de gaz prélevé est injecté via une seringue dans un chromatographe de type GC isolink II (commercialisé par exemple par la société Thermo Fisher Scientific Inc, USA), après avoir été séparé dans une colonne chromatographique de type CP-poraBond Q (commercialisé par exemple par la société AGILENT, France). Puis le gaz peut être introduit dans un four de combustion pour l'analyse du $\delta^{13}C$ et dans un four de pyrolyse pour l'analyse du $\delta D$. Après avoir été oxydé ou réduit, le gaz arrive jusqu'à un spectromètre de masse, par exemple de type MAT 253 (commercialisé par exemple par la société Thermo Fisher Scientific Inc, USA) où il est ionisé. Les ions sont ensuite déviés par un champ magnétique jusqu'aux collecteurs pour obtenir ainsi les rapports isotopiques des masses $^{13}C$ / $^{12}C$ et $^2H/^1H$.

Les conditions analytiques utilisées pour cette mise en oeuvre particulière de cette deuxième variante de l'invention peuvent être les suivantes :

- Température du GC : -10 °C
- Débit du gaz vecteur : 2 ml/min
- Volume d'échantillon injecté dans le GC : 500 $\mu$L
- Ratio d'injection dans le GC : 1/10
- Température du four de combustion : 1000°C

- Température du four de pyrolyse : 1420°C.

Selon une troisième variante de l'invention, en plus de l'estimation de la concentration en méthane et en au moins une substance chimique gazeuse odorante, on peut estimer, à l'étape 3), la concentration en au moins une autre espèce chimique gazeuse, et de préférence plusieurs espèces chimiques gazeuses, comprises dans la liste constituée par : NO, $NO_2$, $N_2O$, $N_2O_3$, $N_2O_4$ (ou autrement dit les Nox), $SO_2$, $SO_3$ (ou autrement dit les SOx) et l'$H_2S$. En effet, de telles estimations permettent de mieux caractériser l'origine du méthane dont une fuite a été détectée, le biométhane étant généralement plus riche en Nox et en Sox que le gaz naturel. Selon une mise en oeuvre de l'invention, cette estimation supplémentaire est réalisée dans la gamme de rayonnement UV, au moyen au moins d'une source lumineuse émettant au moins dans l'UV et d'un spectromètre apte à détecter et mesurer un rayonnement UV. Selon une mise en oeuvre de l'invention, une gamme de longueur d'onde adaptée pour la mesure de la concentration en $SO_2$ peut être comprise entre 190 et 240 nm, de préférence entre 270 et 300 nm, très préférentiellement entre 195 et 210 nm. Selon une mise en oeuvre de l'invention, une gamme de longueur d'onde adaptée pour la mesure de la concentration en $H_2S$ peut être comprise entre 190 et 240 nm, de préférence entre 185 et 210 nm, très préférentiellement entre 190 et 205 nm.

Selon une quatrième variante du procédé selon l'invention, on peut déterminer en outre, à l'étape 3), la température de l'air ambiant, en plus d'au moins la concentration en au moins le méthane et en espèce chimique odorante. Avantageusement, on détermine la température du milieu gazeux par modification du coefficient d'extinction molaire de l'absorbance de l'espèce chimique dont on souhaite mesurer la concentration, ladite absorbance de l'espèce chimique étant extraite de l'absorbance du milieu gazeux. La modification du coefficient d'extinction molaire peut être un décalage de la longueur d'onde, conduisant à une absorption à des longueurs d'ondes différentes, ou une modification de l'amplitude de l'absorbance à une longueur d'onde donnée, ou une combinaison des deux. Lorsque le comportement exact du coefficient d'extinction molaire de l'absorbance en fonction de la température d'une espèce chimique est connu, par le biais de mesures préalables ou de données issues de la littérature, permettant de créer une bibliothèque, cette espèce chimique peut être utilisée comme indicateur de température. Le degré de précision sur la détermination de la température dépend de la sensibilité du coefficient d'extinction molaire de l'espèce chimique dans la gamme de longueur d'onde mesurée. La figure 3 illustre l'influence de la température sur l'absorbance d'une espèce chimique, ici l'ammoniac, exploitée pour déterminer la température selon la présente invention. La courbe A-Tc représente l'absorbance d'une espèce chimique pour une température faible, par exemple 20°C, et la courbe A-Th représente l'absorbance de cette espèce chimique pour une température élevée, par exemple 450°C. Une modification du coefficient d'extinction molaire par exemple aboutit à un décalage du signal d'absorption. Le même type d'algorithme que ceux utilisés pour déterminer la concentration des espèces chimiques peut être utilisé pour déterminer la température. Cette quatrième variante de l'invention permet d'accéder à la température des espèces chimiques dans l'air ambiant, sans appareil de mesure supplémentaire.

Comme il va de soi, l'invention ne se limite pas aux seules formes de réalisation du système et du procédé, décrits et illustrés ci-dessus à titre d'exemple, elle embrasse au contraire toutes les variantes de réalisation, ainsi que toutes les combinaisons, de ces formes de réalisation, de manière à combiner leurs effets.

Ainsi, le système et le procédé selon l'invention permettent d'estimer au moins la concentration en méthane ainsi que la concentration en au moins une espèce chimique odorante présents dans l'air ambiant. Cette mesure conjointe permet de qualifier s'il s'agit ou non d'une fuite de gaz de type gaz naturel ou biométhane destinés à un usage commercial, ces gaz contenant à la fois au moins du méthane et au moins une molécule odorante.

De plus, ces concentrations peuvent être obtenues en une seule et unique mesure, avec un seul et même système. Par ailleurs, ces mesures sont réalisées in situ, sans nécessiter d'étape de sur-concentration des espèces chimiques à mesurer, même si elles sont présentes en faible quantité dans l'air ambiant.

En outre, le procédé selon l'invention permet une mesure dissociée et simultanée non seulement du méthane et d'au moins une molécule odorante, mais également d'une pluralité d'autres espèces chimiques gazeuses.

Ainsi, le système et le procédé selon l'invention permettent une surveillance fiable des éventuelles fuites d'un gaz destiné à alimenter des réseaux de distribution de gaz, en détectant, quantifiant et qualifiant des espèces chimiques constituant le gaz de ces fuites.

Le système et le procédé selon l'invention peuvent être avantageusement mis en oeuvre de manière embarquée dans ou sur un véhicule.

**Exemples**

Les avantages du procédé et du système selon l'invention sont présentés ci-après dans un exemple d'application.

Pour cet exemple d'application, les étapes 1) et 2) ont été réalisées au moyen d'un système selon une mise en oeuvre de l'invention embarqué sur le toit d'un véhicule en mouvement le long d'une route proche d'un site géologique de stockage de gaz naturel.

Le système optique selon cette mise en oeuvre de l'invention comporte une unique source lumineuse pour émettre un rayonnement UV et un rayonnement IR à travers l'air ambiant, ainsi qu'un spectromètre UV et un détecteur IR. Pour cette mise en oeuvre, le détecteur IR comprend deux capteurs pyroélectriques avec des filtres spécifiques pour le méthane et l'éthane, ainsi qu'un capteur supplémentaire pour une correction des fluctuations de l'intensité lumineuse de la source tel que décrit ci-dessus.

La configuration des différents éléments du système optique de cette mise en oeuvre de l'invention est celle présentée à la figure 1B, c'est-à-dire une configuration réflective. Une telle configuration permet d'augmenter la sensibilité du système optique selon l'invention, et donc de réaliser des mesures de concentration d'une espèce chimique même lorsque celle-ci est présente en faible concentration dans l'air ambiant (jusqu'à 5 ppb).

Lors de la mise en oeuvre de l'étape 3) du procédé selon l'invention, on a estimé la concentration en THT, en éthanethiol et en dioxyde de soufre à partir du signal numérique issu du spectromètre UV, ainsi que la concentration en méthane et en éthane à partir du signal numérique issu du détecteur IR.

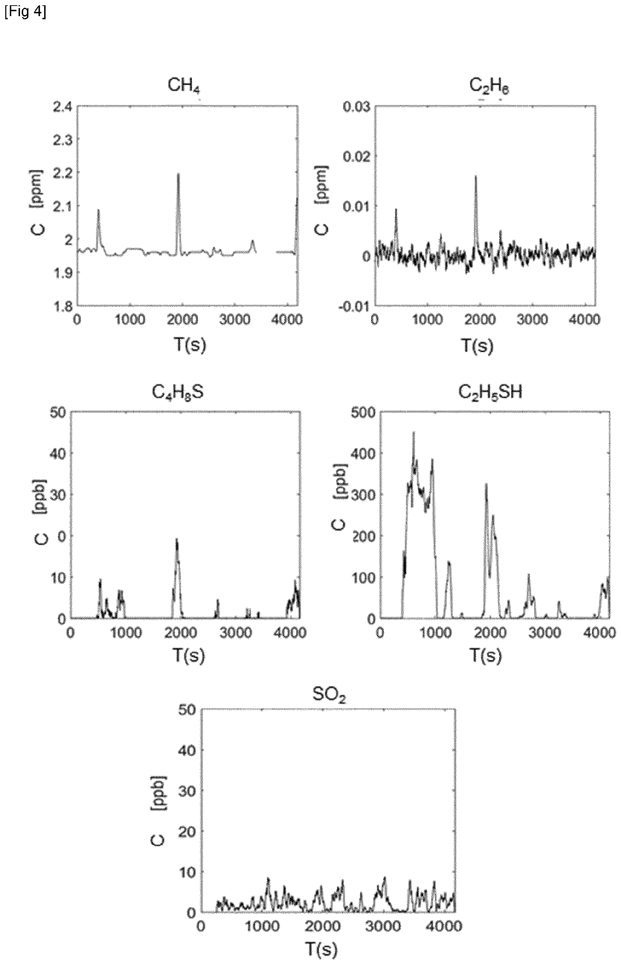

La figure 4 illustre l'évolution des concentrations C en méthane ($CH_4$), en éthane ($C_2H_6$), en THT ($C_4H_8S$), en éthanethiol ($C_2H_5SH$) et en dioxyde de soufre ($SO_2$) en fonction du temps T de parcours du véhicule embarquant le système selon la mise en oeuvre de l'invention décrite ci-dessus, le véhicule se déplaçant autour d'un site industriel pétrochimique, chaque temps de parcours correspondant à une position GPS. On peut observer sur cette figure la présence de plusieurs pics de concentration, le plus souvent en correspondance d'une espèce chimique gazeuse à une autre. En particulier, on peut observer un pic significatif à T=2000 s pour les concentrations en méthane (2.2 ppm), en éthane (0.15 ppm) et en THT (20 ppb). Cela est une indication claire qu'il y a une fuite de gaz proche de la localisation GPS correspondant au temps de parcours T=2000 s. En effet, ces trois concentrations sont les trois caractéristiques du gaz naturel présent dans le réseau. L'éthanethiol et le dioxyde de soufre présents de manière générale en forte quantité autour du site (respectivement à une centaine et une dizaine de ppb) sont liés au différentes activités industrielles présentes (production de produits phytosanitaires et de biocarburants).

Ainsi, malgré un environnement global pollué, la détection d'une fuite de gaz naturel de réseau est possible au moyen du système et du procédé selon l'invention.

**Revendications**

1. Procédé pour détecter et caractériser une fuite d'un gaz (10) dans l'air ambiant, ledit gaz (10) comprenant au moins du gaz naturel et/ou du biométhane préalablement odorisés au moyen d'au moins d'une espèce chimique odorante, ledit procédé étant mis en oeuvre au moyen au moins d'un système de mesure optique comprenant au moins une source lumineuse (41), un spectromètre UV (44), et un détecteur IR (44'), ledit procédé comprenant au moins les étapes suivantes :

    a) l'émission par ladite au moins ladite source lumineuse (41) d'un rayonnement UV (42) et d'un rayonnement IR (42') à travers ledit air ambiant dans une zone de mesure (21) ;
    b) la détection par ledit spectromètre UV (44) et par ledit détecteur IR (44') d'au moins une partie dudit rayonnement UV (43) et d'au moins une partie dudit rayonnement IR (43') ayant traversés ledit air ambiant dans ladite zone de mesure (21), et la génération d'au moins un signal numérique (50, 50') de l'intensité lumineuse en fonction de la longueur d'onde de ladite partie dudit rayonnement UV (43) et de ladite partie dudit rayonnement IR (43') ayant traversés ledit air ambiant dans ladite zone de mesure (21) ;
    c) l'estimation d'au moins une concentration en méthane et une concentration en ladite au moins une espèce chimique odorante présents dans ladite zone de mesure (21), à partir au moins dudit au moins un signal numérique (50, 50') ;
    d) la détection et la caractérisation d'une fuite dudit gaz (10) dans ladite zone de mesure (21) au moins par une comparaison de ladite concentration en méthane avec un premier seuil et une comparaison de ladite concentration en ladite au moins une espèce chimique odorante avec un deuxième seuil.

2. Procédé selon la revendication 1, dans lequel ledit système de mesure optique comprend au moins un réflecteur (45) pour réfléchir ledit rayonnement UV (42) et ledit rayonnement IR (42') émis par ladite au moins une source lumineuse (41) en direction dudit spectromètre UV (44) et dudit détecteur IR (44').

3. Procédé selon l'une des revendications précédentes, dans lequel ladite espèce chimique odorante est du THT, du méthanetiol ou de l'éthanetiol.

4. Procédé selon l'une des revendications précédentes, dans lequel, à l'étape c), on détermine ladite concentration en méthane et ladite concentration en ladite au moins une espèce chimique odorante de la manière suivante :

    - on détermine une absorbance (A) dudit air ambiant en fonction de la longueur d'onde à partir au moins dudit au moins un signal numérique de l'intensité lumineuse (50, 50') en fonction de la longueur d'onde desdites parties dudit rayonnement UV (43) et dudit rayonnement IR (43') ayant traversés ledit air ambiant et d'un signal numérique de référence de l'intensité lumineuse en fonction de la longueur d'onde ;

- on détermine au moins ladite concentration en méthane et ladite concentration en ladite au moins une espèce chimique odorante à partir de ladite absorbance (A) et de caractéristiques prédéterminées d'absorbance, de température et de la pression du méthane et de ladite au moins espèce chimique odorante.

5. Procédé selon l'une des revendications précédentes, dans lequel ledit premier seuil correspond à un écart compris entre 0.01 et 0.02 ppm par rapport à une teneur moyenne atmosphérique de référence en méthane.

6. Procédé selon l'une des revendications précédentes, dans lequel ledit deuxième seuil est compris entre 5 et 7 ppb.

7. Procédé selon l'une des revendications précédentes, dans lequel, à l'étape c), on détermine en outre une concentration en éthane présent dans ladite zone de mesure (21), et dans lequel, à l'étape d), on détermine en outre un rapport entre ladite concentration en éthane et ladite concentration en méthane, et on compare ledit rapport à un troisième seuil pour déterminer si ledit gaz (10) est d'origine thermogénique ou si ledit gaz est d'origine biogénique.

8. Procédé selon la revendication 7, dans lequel ledit troisième seuil est compris entre 3.5% et 4.5%.

9. Procédé selon l'une des revendications précédentes, comprenant une étape supplémentaire consistant en l'analyse de l'isotopie de la molécule de méthane présente dans ladite zone de mesure (21), par une estimation au moins du rapport isotopique $\delta^{13}C$ et du rapport isotopique $\delta D$.

10. Système pour la mise en oeuvre du procédé pour détecter et caractériser une fuite d'un gaz (10) dans l'air ambiant selon l'une quelconque des revendications précédentes, ledit système comprenant au moins :

- au moins une source lumineuse (41) pour émettre un rayonnement UV (42) et un rayonnement IR (42') à travers l'air ambiant dans une zone de mesure (21) ;
- un spectromètre (44) susceptible de détecter au moins une partie dudit rayonnement UV (43) ayant traversé l'air ambiant dans ladite zone de mesure (21) et de générer un signal numérique (50) de l'intensité lumineuse en fonction de la longueur d'onde de ladite partie du rayonnement UV (43) ;
- un détecteur IR (44') susceptible de détecter au moins une partie dudit rayonnement IR (43') ayant traversé l'air ambiant dans ladite zone de mesure (21), et de générer un signal numérique (50') de l'intensité lumineuse en fonction de la longueur d'onde de la partie du rayonnement IR (43') ;
- des moyens pour le traitement et l'analyse desdits signaux numériques (50, 50') pour détecter et caractériser ladite fuite dudit gaz (10) dans l'air ambiant.

11. Système selon la revendication 10, dans lequel ledit détecteur IR (44') comprend au moins un capteur pyroélectrique apte à détecter au moins la présence de méthane.

12. Système selon la revendication 11, dans lequel ledit détecteur IR (44') comprend en outre au moins un capteur pyroélectrique supplémentaire, apte à détecter au moins la présence d'éthane.

**Patentansprüche**

1. Verfahren zur Detektierung und Charakterisierung eines Leckgases (10) in der Umgebungsluft, wobei das Gas (10) mindestens Erdgas und/oder Biomethan umfasst, die zuvor mittels einer geruchsbehafteten chemischen Spezies odoriert wurden, wobei das Verfahren mithilfe mindestens eines optischen Messsystems durchgeführt wird, das mindestens eine Lichtquelle (41), ein UV-Spektrometer (44) und einen IR-Detektor (44') umfasst, wobei das Verfahren mindestens die folgenden Schritte umfasst:

a) Emittieren einer UV-Strahlung (42) und einer IR-Strahlung (42') von mindestens der Lichtquelle (41) durch die Umgebungsluft in einem Messgebiet (21);
b) Erkennen mindestens eines Teils der UV-Strahlung (43) und mindestens eines Teils der IR-Strahlung (43'), die die Umgebungsluft im Messgebiet (21) durchlaufen hat, durch das UV-Spektrometer (44) und durch den IR-Detektor (44') und Erzeugen mindestens eines digitalen Signals (50, 50') der Lichtintensität in Abhängigkeit von der Wellenlänge des Teils der UV-Strahlung (43) und des Teils der IR-Strahlung (43'), die die Umgebungsluft im Messgebiet (21) durchlaufen haben;
c) Schätzen mindestens einer Konzentration von Methan und einer Konzentration der mindestens einen geruchsbehafteten chemischen Spezies, die im Messbereich (21) vorhanden sind, auf Grundlage des mindestens einen digitalen Signals (50, 50');
d) Detektieren und Charakterisieren eines Leckgases (10) im Messbereich (21) mindestens durch einen Vergleich der Methankonzentration mit einem ersten Schwellenwert und einen Vergleich der Konzentration der mindestens einen geruchsbehafteten chemischen Spezies mit einem zweiten Schwellenwert.

2. Verfahren nach Anspruch 1, wobei das optische Messsystem mindestens einen Reflektor (45) zum Reflektieren der UV-Strahlung (42) und der IR-Strahlung (42'), die von der mindestens einen Lichtquelle (41) emittiert wird, in Richtung des UV-Spektrometers (44) und des IR-Detektors (44').

3. Verfahren nach einem der vorhergehenden Ansprüche, wobei die geruchsbehaftete chemische Spezies THT, Methanetiol oder Ethanetiol ist.

4. Verfahren nach einem der vorhergehenden Ansprüche, wobei in Schritt c) die Methankonzentration und die Konzentration der mindestens einen geruchsbehafteten chemischen Spezies auf folgende Weise bestimmt wird:

   - bestimmt wird ein Absorptionsvermögen (A) der Umgebungsluft in Abhängigkeit von der Wellenlänge auf Grundlage des mindestens einen digitalen Signals der Lichtintensität (50, 50') in Abhängigkeit von der Wellenlänge der Teile der UV-Strahlung (43) und der IR-Strahlung (43'), die die Umgebungsluft durchlaufen haben, und eines digitalen Referenzsignals der Lichtintensität in Abhängigkeit von der Wellenlänge;
   - bestimmt wird mindestens die Methankonzentration und die Konzentration der mindestens einen geruchsbehafteten chemischen Spezies auf Grundlage des Absorptionsvermögens (A) und vorbestimmter Charakteristika des Absorptionsvermögens, der Temperatur und des Drucks des Methans und der mindestens einen geruchsbehafteten chemischen Spezies.

5. Verfahren nach einem der vorhergehenden Ansprüche, wobei der erste Schwellenwert einer Abweichung zwischen 0,01 und 0,02 ppm gegenüber einem durchschnittlichen atmosphärischen Referenzgehalt an Methan entspricht.

6. Verfahren nach einem der vorhergehenden Ansprüche, wobei der zweite Schwellenwert zwischen 5 und 7 ppb liegt.

7. Verfahren nach einem der vorhergehenden Ansprüche, wobei in Schritt c) außerdem eine im Messgebiet (21) vorhandene Ethankonzentration bestimmt wird und in Schritt d) außerdem ein Verhältnis zwischen der Ethankonzentration und der Methankonzentration bestimmt wird und das Verhältnis mit einem dritten Schwellenwert verglichen wird, um zu bestimmen, ob das Gas (10) thermogenen Ursprungs ist oder ob das Gas biogenen Ursprungs ist.

8. Verfahren nach Anspruch 7, wobei der dritte Schwellenwert zwischen 3,5 % und 4,5 % liegt.

9. Verfahren nach einem der vorhergehenden Ansprüche, das einen zusätzlichen Schritt umfasst, der in der Analyse der Isotopie des im Messgebiet (21) vorhandenen Methanmoleküls durch Schätzung mindestens des Isotopenverhältnisses $\delta^{13}C$ und des Isotopenverhältnisses $\delta D$ besteht.

10. System zur Durchführung des Verfahrens zur Detektierung und Charakterisierung eines Leckgases (10) in der Umgebungsluft nach einem der vorhergehenden Ansprüche, wobei das System mindestens umfasst:

    - mindestens eine Lichtquelle (41) zum Emittieren einer UV-Strahlung (42) und einer IR-Strahlung (42') durch die Umgebungsluft in einem Messgebiet (21);
    - ein Spektrometer (44), das geeignet ist, mindestens einen Teil der UV-Strahlung (43), die die Umgebungsluft im Messgebiet (21) durchlaufen hat, zu detektieren und ein digitales Signal (50) der Lichtintensität in Abhängigkeit von der Wellenlänge des Teils der UV-Strahlung (43) zu generieren;
    - einen IR-Detektor (44'), der geeignet ist, mindestens einen Teil der IR-Strahlung (43'), die die Umgebungsluft im Messgebiet (21) durchlaufen hat, zu detektieren und ein digitales Signal (50') der Lichtintensität in Abhängigkeit von der Wellenlänge des Teils der IR-Strahlung (43') zu generieren;
    - Mittel zur Behandlung und Analyse der digitalen Signale (50, 50'), um das Leckgas (10) in der Umgebungsluft zu detektieren und zu charakterisieren.

11. System nach Anspruch 10, wobei der IR-Detektor (44') mindestens einen pyroelektrischen Sensor umfasst, der fähig ist, mindestens das Vorhandensein von Methan zu detektieren.

12. System nach Anspruch 11, wobei der IR-Detektor (44') außerdem mindestens einen zusätzlichen pyroelektrischen Sensor umfasst, der fähig ist, mindestens das Vorhandensein von Ethan zu detektieren.

**Claims**

1. Method for detecting and characterizing a leak of a gas (10) into the ambient air, said gas (10) comprising at least natural gas and/or biomethane previously odorized by means of at least one odorant chemical species, said method being implemented by means of at least one optical measurement system comprising at least one light source (41), a UV spectrometer (44), and an IR detector (44'), said method comprising at least the following steps:

a) the emission by said at least one light source (41) of a UV radiation (42) and of an IR radiation (42') through said ambient air in a measurement zone (21) ;

b) the detection by said UV spectrometer (44) and by said IR detector (44') of at least a part of said UV radiation (43) and of at least a part of said IR radiation (43') having passed through said ambient air in said measurement zone (21), and the generation of at least one digital signal (50, 50') of the light intensity as a function of the wavelength of said part of said UV radiation (43) and of said part of said IR radiation (43') having passed through said ambient air in said measurement zone (21);

c) the estimation of at least a concentration of methane and a concentration of said at least one odorant chemical species present in said measurement zone (21), from at least said at least one digital signal (50, 50');

d) the detection and the characterization of a leak of said gas (10) in said measurement zone (21) at least by a comparison of said concentration of methane with a first threshold and a comparison of said concentration of said at least one odorant chemical species with a second threshold.

2. Method according to Claim 1, wherein said optical measurement system comprises at least one reflector (45) for reflecting said UV radiation (42) and said IR radiation (42') emitted by said at least one light source (41) towards said UV spectrometer (44) and said IR detector (44').

3. Method according to one of the preceding claims, wherein said odorant chemical species is THT, methanethiol or ethanethiol.

4. Method according to one of the preceding claims, wherein, in the step c), said concentration of methane and said concentration of said at least one odorant chemical species are determined as follows:

- an absorbance (A) of said ambient air as a function of the wavelength is determined from at least said at least one digital signal of the light intensity (50, 50') as a function of the wavelength of said parts of said UV radiation (43) and of said IR radiation (43') having passed through said ambient air and of a reference digital signal of the light intensity as a function of the wavelength;
- at least said concentration of methane and said concentration of said at least one odorant chemical species are determined from said absorbance (A) and from predetermined characteristics of absorbance, of temperature and of the pressure of the methane and of said at least one odorant chemical species.

5. Method according to one of the preceding claims, wherein said first threshold corresponds to a deviation lying between 0.01 and 0.02 ppm with respect to a reference average atmospheric content of methane.

6. Method according to one of the preceding claims, wherein said second threshold lies between 5 and 7 ppb.

7. Method according to one of the preceding claims, wherein, in the step c), a concentration of ethane present in said measurement zone (21) is also determined, and wherein, in the step d), a ratio between said concentration of ethane and said concentration of methane is also determined, and said ratio is compared to a third threshold to determine whether said gas (10) is of thermogenic origin or whether said gas is of biogenic origin.

8. Method according to Claim 7, wherein said third threshold lies between 3.5% and 4.5%.

9. Method according to one of the preceding claims, comprising an additional step consisting in analysing the isotopy of the molecule of methane present in said measurement zone (21), by an estimation at least of the isotopic ratio $\delta^{13}C$ and of the isotopic ratio 5D.

10. System for implementing the method for detecting and characterizing a leak of a gas (10) into the ambient air according to any one of the preceding claims, said system comprising at least:

- at least one light source (41) for emitting a UV radiation (42) and an IR radiation (42') through the ambient air in a measurement zone (21);
- a spectrometer (44) capable of detecting at least a part of said UV radiation (43) having passed through the ambient air in said measurement zone (21) and of generating a digital signal (50) of the light intensity as a function of the wavelength of said part of the UV radiation (43);
- an IR detector (44') capable of detecting at least a part of said IR radiation (43') having passed through the ambient air in said measurement zone (21), and of generating a digital signal (50') of the light intensity as a function of the wavelength of the part of the IR radiation (43');

- means for processing and analysing said digital signals (50, 50') to detect and characterize said leak of said gas (10) into the ambient air.

11. System according to Claim 10, wherein said IR detector (44') comprises at least one pyroelectric sensor capable of detecting at least the presence of methane.

12. System according to Claim 11, wherein said IR detector (44') also comprises at least one additional pyroelectric sensor, capable of detecting at least the presence of ethane.

[Fig 1A]

[Fig 1B]

[Fig 2]

[Fig 3]

[Fig 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2184230 A
- EP 1499881 B1
- CN 204085798 U
- WO 2017201194 A1
- US 2018266944 A1
- US 5281816 A
- US 4507558 A

**Littérature non-brevet citée dans la description**

- **RELLA, C. W. ; HOFFNAGLE, J. ; HE, Y. ; TAJIMA, S.** Local- and regional-scale measurements of CH4, $\delta$13CH4, and C2H6 in the Uintah Basin using a mobile stable isotope analyzer. *Atmos. Meas. Tech.,* 2015, vol. 8, 4539-4559, https://doi.org/10.5194/amt-8-4539-2015
- **SCHOELL, M.** The hydrogen and carbon isotopic composition of methane from natural gases of various origins. *Geochimica Cosmochimica Acta,* 1980, vol. 44, 649-661
- **SNOVER, A. K. ; P. D. QUAY ; W. M. HAO.** The D/H content of methane emitted from biomass burning. *Global Biogeochem. Cycles,* 2000, vol. 14 (1), 11-24